# EUROPÄISCHE PATENTSCHRIFT

(11) **EP 1 354 734 B1**
(45) Veröffentlichungstag und Bekanntmachung des Hinweises auf die Patenterteilung: **22.09.2004**
(21) Anmeldenummer: 03008244.0
(22) Anmeldetag: 09.04.2003
(51) Int. Cl.: B60H 1/00

(54) **Gewichtsreduzierte Heizungs-, Lüftungs- und Klimaanlage**
Reduced weight heating, ventilating, and cooling device
Appareil de chauffage, de ventilation, et de climatisation de poids réduit

(30) Priorität: 20.04.2002 DE 10217745
(43) Veröffentlichungstag der Anmeldung: 22.10.2003
(73) Patentinhaber: MAN Nutzfahrzeuge Aktiengesellschaft, 80976 München (DE)
(72) Erfinder: Kirsamer, Jörg, 72574 Bad Urach-Seeburg (DE); Jarausch, Bernd, 85244 Röhrmoos (DE)

(56) Entgegenhaltungen:
- DE-A- 3 133 501
- DE-A- 19 536 975
- DE-A- 19 625 927
- DE-A- 19 937 949
- US-A- 5 531 264

## Beschreibung

Die Erfindung betrifft eine Vorrichtung nach dem Oberbegriff des Anspruches 1.

Eine Vorrichtung dieser Art ist aus der DE 196 25 927 C2 bekannt. Die genannte Einrichtung beinhaltet eine Fahrzeugzusatzheizung, einen Verdampfer zur Erzeugung von Kälte, einen Verflüssiger und einen Wärmetauscher zum Verdampfer, wobei die genannten Bauteile einschließlich von Umschaltventilen zu einer Baueinheit zusammengefasst und in einen Aufnahmeraum eines Fahrzeuges einschiebbar sind.

Die genannte Baueinheit ist mit einem Sekundärkreislauf, der die Verbraucher für die Klimatisierung des Fahrzeuges beinhaltet und als Wärmeträger Wasser mit einem Frostschutzmittel hat, in Strömungsverbindung bringbar.

Es wird zwar nur ein Wärmeträger verwendet, aber es sind für jeden Verbraucher von insgesamt drei Verbrauchern zwei Strömungskreise mit insgesamt vielen Umschaltventilen (3-Wege-Ventile) erforderlich, die mit den dazu notwendigen Leitungen viel Gewicht mit sich bringen. Weiterhin dürfte die genannte Einrichtung sehr teuer sein.

Aufgabe der Erfindung ist es, eine technisch einfachere, leichtere und preiswerte Klimatisierungsanlage darzustellen.

Die Aufgabe wird erfindungsgemäß durch die Merkmale des Anspruches 1 gelöst.

Dadurch, dass in die Hauptvorlaufleitung des Wärmeträgermediums nur an der Stelle, an der von einer Klimabox gekühltes Wärmeträgermedium in die Hauptvorlaufleitung einbringbar ist, ein elektrisch ansteuerbares Dreiwegeschaltventil V2 vorgesehen ist, ist der Gesamtbedarf an Wärmemenge oder Kühlmenge an einer Stelle für die nachgeschalteten Verbraucher regelbar.

Weiterhin wird erfindungsgemäß der Wärme- bzw. Kältebedarf der nachgeordneten Verbraucher über Mengenregelventile V3, V4 geregelt, die je nach Wärmebedarf bzw. Kältebedarf der Verbraucher, mehr oder weniger öffnen oder ganz schließen.

Mengenregelventile sind im Gewicht wesentlich geringer, als die genannten Dreiwegeschaltventile. Außerdem spart man sich bei einem Mengenregelventil bei jedem Verbraucher eine Rücklaufleitung mit Anschluss in die Hauptvorlaufleitung.

Bei herkömmlichen Anlagen sind für die Verteilung von Mengenströmen Dreiwegeschaltventile mit einem Rücklauf zum Wärme- oder Kälteerzeuger zurückführend angeordnet, wie dies aus der DE 196 25 927 hervorgeht.

Für die Verbraucher im Dachbereich ist, ähnlich wie bei herkömmlichen Anlagen, ein Dreiwegeschaltventil V5 vorgesehen. Weiterhin ist eine Rücklaufleitung und eine zusätzliche Umwälzpumpe vorgesehen.

Die Verbraucher im Dachbereich sind pro Fahrzeugseite betrachtet, hintereinander geschaltet, was weniger Leitungslänge der Verrohrung bedeutet.

Die Fahrerplatzheizung ist, in Strömungsrichtung des Wärmeträgers gesehen, vor dem Dreiwegeschaltventil V2. Dadurch ist über das Mengenregelventil V1 die maximale Wärmetauscherleistung für den Fahrerplatz durch eine Zusatzheizung alleine oder bei Fahrzeugbetrieb mit der Abwärme des Dieselmotors schnell verfügbar.

Die Kühlung, aber auch eine mögliche weitere Beheizung des Fahrerplatzes, ist mit dem Wärmetauscher nach dem Dreiwegeschaltventil über das Mengenregelventil V3 möglich. Damit sind für die optimale Klimatisierung des Fahrerplatzes zwei Wärmetauscher vorhanden.

Die Klimabox ist eine kompakte Einheit und beinhaltet:
- den Kältemittelverdichter,
- den Verdampfer,
- den Verflüssiger,
- einen Wärmetauscher zum Verdampfer, der einerseits das Kältemittel und andererseits Wasser mit Frostschutzmittel enthält und
- zwei Leitungen zum Anschluss an den fahrzeugseitigen Wärmeträgerkreislauf.

Die Klimabox ist vom Hersteller fertig als eine Einheit montiert. Für den funktionstüchtigen Einbau sind nur zwei Leitungen für die Verbindung mit dem fahrzeugseitigen Wärmeträgerkreislauf und der Kältemittelverdichter anzuschließen.

Die Klimabox ist beispielsweise im Motorraum, im Heck des Fahrzeuges angeordnet.

Der Rücklauf des Wärmeträgermediums erfolgt nur über die entsprechenden Wärmetauscher, die im Fahrzeuginnenraum angeordnet sind.

Der Wärmebedarf oder Kühlungsbedarf wird durch Temperatursensoren im Fahrzeuginnenraum an den unterschiedlichen Stellen indirekt ermittelt.

Die Temperatursensoren sind z. B. am Fahrerplatz und im Fahrgastraum vorne, in der Mitte und im hinteren Bereich und in der Höhe zwischen Fensterunterkante und Fußboden angeordnet. Die Sensoren liefern Signale an das Steuergerät.

Durch den Vergleich der Istwerte mit den eingestellten Sollwerten werden die Mengenregelventile durch Signale vom Steuergerät gesteuert.

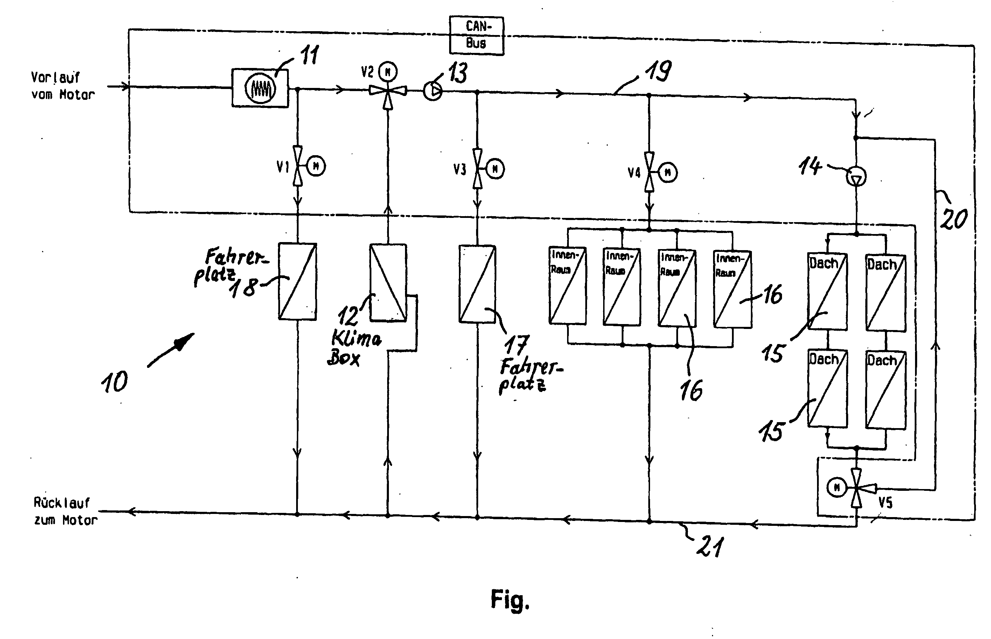

In der Zeichnung ist ein Ausführungsbeispiel der Erfindung schematisch dargestellt.

Vom Antriebsmotor kommt der Vorlauf des Wärmeträgermediums. Im Normalfall ist im Vorlauf ein Zusatzheizgerät 11 vorgesehen.

Das Dreiwegeschaltventil V2 ist an der Stelle vorgesehen, an der von der Klimabox 12 gekühltes Wärmeträgermedium in den nachgeordneten Kreislauf einspeisbar ist.

Die Fahrerplatzheizung 18 ist vor dem Dreiwegeschaltventil V2, damit am Fahrerplatz über das Mengeregelventil V1 ausreichend und schnell Wärmemenge zur Verfügung steht.

Die Klimabox 12 ist eine kompakte Baueinheit, mit der Kälte mittels eines Wärmetauschers in den fahrzeuginnenraumseitigen Wärmekreislauf, der als Wärmeträgermedium Wasser und ein Frostschutzmittel hat, einbringbar ist.

In die Hauptvorlaufleitung 19 ist eine Umwälzpumpe 13 eingebaut. Die Verbraucher 16, 17 sind über die Mengenregelventile V3 und V4 geregelt.

Der sensible Kreislauf im Dach weist eine Umwälzpumpe 14, ein im Rücklauf angeordnetes Dreiwegeschaltventil V5 und eine Rücklaufleitung 20 auf.

Die Wärmetauscher 15 im Dach sind, je Seite betrachtet, hintereinander verrohrt geschaltet. Diese Ausführung erspart Rohrleitungslänge und damit Gewicht und Kosten.

Die Rücklaufleitungen aller Verbraucher führen direkt in eine gemeinsame Rücklaufleitung 21.

## Patentansprüche

1. Gewichtsreduzierte Heizungs-, Lüftungs- und Klimaanlage für ein Großraumfahrzeug, insbesondere für einen Omnibus, mit einem einzigen Flüssigkeitskreislauf für das wahlweise Beheizen oder Kühlen des Fahrzeugraumes, mit Regelventilen und mit einem Steuergerät, das elektrisch ansteuerbare Regelventile steuert, mit denen die angeforderten Wärmemengen der Verbraucher gesteuert werden, **dadurch gekennzeichnet, dass** in die Hauptvorlaufleitung (19) des Wärmeträgermediums nur an der Stelle, an der durch eine Klimabox (12) gekühltes Wärmeträgermedium in die Hauptvorlaufleitung einbringbar ist, ein elektrisch ansteuerbares Dreiwegeschaltventil (V2) vorgesehen ist und für die Verteilung der angeforderten Wärmemengen der einzelnen Verbraucher (16, 17) elektrisch ansteuerbare Mengenregelventile (V3, V4) vorgesehen sind, die Wärmemenge der Verbraucher (15) im Dach separat über ein Dreiwegeschaltventil (V5) und eine Rücklaufleitung für diesen Kreis geregelt ist und der Rücklauf des Wärmeträgermediums nur über die einzelnen Verbraucher (15, 16, 17, 18) erfolgt.

2. Heizungs-, Lüftungs- und Klimaanlage nach Anspruch 1, **dadurch gekennzeichnet, dass** die Beheizungseinrichtung (18) für den Fahrerplatz von der Strömungsrichtung des Wärmeträgermediums aus gesehen, vor dem Dreiwegeschaltventil (V2) angeordnet ist.

3. Heizungs-, Lüftungs- und Klimaanlage nach Anspruch 1, **dadurch gekennzeichnet, dass** im Dachbereich die Verbraucher, linksseitig und rechtsseitig des Fahrzeuges für sich gesehen, hintereinander geschaltet bzw. hintereinander geschaltet verrohrt sind.

## Claims

1. Weight-reduced heating, ventilation and air-conditioning system for a large-capacity vehicle, particularly for a bus, with a single fluid circuit for the optional heating or cooling of the vehicle interior, with control valves and with a control unit that controls electrically triggerable control valves with which the required heat quantities of the consumers are controlled, **characterised in that** an electronically triggerable 3-way switching valve (V2) is provided in the main lead line (19) for the heat carrier medium only at that point at which cooled heat carrier medium cooled by a climatic box (12) can be fed into the main lead line and electrically triggerable quantity control valves (V3, V4) are provided for the distribution of the required heat quantities of the individual consumers (16, 17), the heat quantity of the consumers (15) in the roof area is controlled separately via a 3-way switching valve (V5) and a return line for this circuit and the heat carrier medium is returned only via the individual consumers (15, 16, 17, 18).

2. Heating, ventilation and air-conditioning system according to Claim 1, **characterised in that**, if viewed from the flow direction of the heat carrier medium, the heating equipment (18) for the driver's station is arranged upstream of the 3-way switching valve (V2).

3. Heating, ventilation and air-conditioning system according to Claim 1, **characterised in that**, if viewed for themselves, the consumers in the roof area on the left and right hand sides of the vehicle are connected in series and piped in series.

## Revendications

1. Installation de chauffage, d'aération et de climatisation de poids réduit, pour véhicule à habitacle important, en particulier pour un autobus/car, avec un seul circuit de fluide pour assurer soit le chauffage, soit le rafraîchissement de l'habitacle, avec des valves de régulation et avec un appareil de commande qui pilote les valves de régulation à actionnement électrique, avec lesquelles les débits de chaleur demandés des consommateurs sont commandés, **caractérisée par le fait qu'**une valve de commutation à 3 voies (V2) à actionnement électrique est prévue dans la canalisation montante principale (19) du fluide calorifère, uniquement à un emplacement où le fluide calorifère refroidi par un climatiseur (12) peut être placé dans la canalisation montante principale, et **par le fait que** des valves de régulation de débit (V3, V4) à actionnement électrique sont prévues pour la répartition des débits de chaleur demandés de chaque consommateur (16, 17), que le débit de chaleur des consommateurs (15) est régulé dans le pavillon de manière séparée par l'intermédiaire d'une valve de commutation à 3 voies (V5) et d'une conduite descendante pour ce circuit et que le retour du fluide calorifère n'a lieu que par l'intermédiaire de chaque consommateur (15, 16, 17, 18).

2. Installation de chauffage, d'aération et de climatisation selon la revendication 1, **caractérisée par le fait que** le dispositif de chauffage (18) du poste de conduite est disposé, vu de la direction d'écoulement du fluide calorifère, en amont de la valve de commutation à 3 voies (V2).

3. Installation de chauffage, d'aération et de climatisation selon la revendication 1, **caractérisée par le fait que**, au niveau du pavillon, les consommateurs sont, vu du côté gauche et du côté droit du véhicule, raccordés les uns derrière les autres ou reliés par conduit les uns derrière les autres.
